(19) Europäisches Patentamt
European Patent Office
Office européen des brevets

(11) **EP 3 314 223 B1**

(12) **EUROPÄISCHE PATENTSCHRIFT**

(45) Veröffentlichungstag und Bekanntmachung des Hinweises auf die Patenterteilung:
**12.06.2024   Patentblatt 2024/24**

(21) Anmeldenummer: **16732265.0**

(22) Anmeldetag: **22.06.2016**

(51) Internationale Patentklassifikation (IPC):
*G01J 1/32* (2006.01)      *G05D 25/02* (2006.01)
*E06B 9/32* (2006.01)      *H05B 47/105* (2020.01)
*H05B 47/11* (2020.01)      *H05B 47/115* (2020.01)

(52) Gemeinsame Patentklassifikation (CPC):
**G01J 1/32; E06B 9/68; G05D 25/02; H05B 47/105; H05B 47/11; H05B 47/115;** E06B 2009/6827; Y02B 20/40

(86) Internationale Anmeldenummer:
**PCT/EP2016/064399**

(87) Internationale Veröffentlichungsnummer:
**WO 2016/207208 (29.12.2016 Gazette 2016/52)**

(54) **VORRICHTUNG UND VERFAHREN ZUR REGELUNG DES LICHTEINFALLS**

DEVICE AND METHOD FOR CONTROLLING THE INCIDENCE OF LIGHT

DISPOSITIF ET PROCÉDÉ POUR LA RÉGULATION DE L'INCIDENCE DE LA LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2015   DE 102015211507**

(43) Veröffentlichungstag der Anmeldung:
**02.05.2018   Patentblatt 2018/18**

(73) Patentinhaber: **Fraunhofer-Gesellschaft zur Förderung
der angewandten Forschung e.V.
80686 München (DE)**

(72) Erfinder:
• **DE BOER, Jan**
**70374 Stuttgart (DE)**
• **HUBSCHNEIDER, Carolin**
**70193 Stuttgart (DE)**

(74) Vertreter: **Friese Goeden Patentanwälte PartGmbB
Widenmayerstraße 49
80538 München (DE)**

(56) Entgegenhaltungen:
WO-A1-2015/023843      DE-A1- 10 037 556
US-A1- 2011 220 299

**Beschreibung**

Die Erfindung betrifft eine Vorrichtung und ein Verfahren zur Regelung des Lichteinfalls an zumindest einer vorgebbaren Stelle eines Raumes, enthaltend zumindest einen optischen Sensor, welcher dazu eingerichtet ist, einen Ist-Wert des Lichteinfalls zu bestimmen, zumindest eine Regelungseinrichtung, welche dazu eingerichtet ist, ein Steuersignal für zumindest eine Lichtquelle zu erzeugen und zumindest eine Lichtquelle, welche dazu eingerichtet ist, in Abhängigkeit des Steuersignals einen Lichteinfall bereit zu stellen. Vorrichtungen und Verfahren der eingangs genannten Art können beispielsweise zur Verbesserung der Ergonomie eines Bildschirmarbeitsplatzes verwendet werden.

Aus der DE 100 37 556 A1 ist eine Vorrichtung der eingangs genannten Art bekannt. Diese misst mittels eines Sensors die Leuchtdichte der Umfeldflächen an einem Bildschirm und steuert eine Sonnen- oder Blendschutzvorrichtung oder auch ein Tageslichtsystem an. Diese Vorrichtung weist jedoch den Nachteil auf, dass für jeden Standort eine individuelle Kalibrierung vorgenommen werden muss, um optimale Lichtbedingungen zu ermöglichen. Nach einem Ortswechsel des Sensors oder auch nur dem Umstellen einiger Möbelstücke muss die Kalibrierung erneut durchgeführt werden. In der Praxis wird das bekannte System daher meist nur ungenügende Ergebnisse erzielen. US2011220299 A1 und WO2015/023843 A1 beschreiben eine Vorrichtung und ein Verfahren zur Regulierung und Steuerung der Lichtmenge in einem Raum mit automatisierter Fensterbeschattung.

Ausgehend vom Stand der Technik liegt der Erfindung somit die Aufgabe zugrunde, eine Vorrichtung und ein Verfahren zur Regelung des Lichteinfalls anzugeben, welche universell verwendbar ist.

Die Aufgabe wird erfindungsgemäß durch eine Vorrichtung gemäß Anspruch 1 und ein Verfahren gemäß Anspruch 9 gelöst. Vorteilhafte Weiterbildungen der Erfindung finden sich in den Unteransprüchen.

Erfindungsgemäß wird eine Vorrichtung zur Regelung des Lichteinfalls an zumindest einer vorgebbaren Stelle eines Raumes vorgeschlagen. Die vorgebbare Stelle kann beispielsweise ein Bildschirmarbeitsplatz sein. In anderen Ausführungsformen der Erfindung kann die vorgebbare Stelle des Raumes jedoch ein anderer Ort sein, dessen Beleuchtungsintensität bzw. Lichteinfall auf einen vorgebbaren Wert geregelt werden soll. Beispielsweise kann es sich um eine Ausstellungsfläche, den Standort einer Zimmerpflanze oder einen Arbeitsplatz für mechanische Tätigkeiten handeln. Auch wenn die Erfindung nachfolgend am Beispiel eines Bildschirmarbeitsplatzes beschrieben wird, soll der Gegenstand der vorliegenden Erfindung nicht auf diese einzige Anwendung beschränkt sein.

Die Erfindung weist zumindest eine Lichtquelle auf, welche durch ein elektrisches Steuersignal beeinflusst werden kann. Die Lichtquelle kann beispielsweise eine Fensteröffnung sein oder enthalten, welche mit einem Blendschutzbehang beschattet werden kann, beispielsweise einer Jalousie, einem Raffstore oder einem textiler Sonnenschutz. In diesem Fall kann die Position des Raffstores, d.h. der Bedeckungsgrad der Fensteröffnung und/oder ggfs. der Einstellwinkel der einzelnen Lamellen durch das Steuersignal beeinflusst werden, um die dem Raum zugeführte Lichtmenge zu beeinflussen. In anderen Ausführungsformen der Erfindung kann ein Sonnen- oder Blendschutz im Fenster integriert sein, beispielsweise in Form einer elektrochromen Verglasung, bei welcher die Transluzenz der Verglasung durch das Steuersignal beeinflusst werden, um die dem Raum zugeführte Lichtmenge zu beeinflussen.

In anderen Ausführungsformen der Erfindung kann alternativ oder zusätzlich zumindest eine elektrische Beleuchtung vorhanden sein, welche in Lichtfarbe und/oder -intensität und/oder -verteilung gesteuert werden kann. In wiederum anderen Ausführungsformen der Erfindung kann weiterhin die Darstellung auf einem Bildschirm beeinflusst werden, beispielsweise indem Helligkeit, Kontrast, Gamma oder weitere Parameter des Bildschirms durch das Steuersignal beeinflusst werden.

Zur Erfassung des Lichteinfalls an der vorgebbaren Stelle im Raum ist zumindest ein optischer Sensor vorhanden. Der optische Sensor kann beispielsweise zumindest eine Fotodiode, einen Fototransistor oder einen Fotowiderstand aufweisen, um die Intensität einfallenden Lichtes zu bestimmen. In einigen Ausführungsformen der Erfindung können mehrere solcher lichtsensitiver Elemente vorhanden sein, um den Lichteinfall aus unterschiedlichen Raumrichtungen zu ermitteln. In wiederum anderen Ausführungsformen der Erfindung kann der zumindest eine optische Sensor zumindest ein Colorimeter enthalten, um zusätzlich zur Lichtintensität auch das Spektrum einfallenden Lichtes zu ermitteln, d. h. die Intensität in Abhängigkeit von der Wellenlänge in zumindest einem Spektralbereich. Der zumindest eine optische Sensor kann optional eine fokussierende oder eine defokussierende oder eine kollimierende Optik aufweisen, um den Akzeptanzbereich an vorgebbare Sollwerte anzupassen.

Weiterhin enthält die erfindungsgemäße Vorrichtung zumindest eine Regelungseinrichtung, welche dazu eingerichtet ist, ein Steuersignal für zumindest eine Lichtquelle zu erzeugen. Die Regelung kann in an sich bekannter Weise auf einem PD-, einem PI-, einem PID-Regler oder weiteren, an sich bekannten Regelkonzepten beruhen. In einigen Ausführungsformen der Erfindung kann die Regelungseinrichtung auf einem neuronalen Netz basieren oder mittels Fuzzy-Logik implementiert werden. Sofern der optische Sensor Licht aus mehreren Einfallsrichtungen erfassen kann, kann die Regelungseinrichtung den Lichteinfall an der vorgebbaren Stelle des Raumes auch in mehreren Richtungen optimieren. Hierdurch kann die Ausleuchtung weiter verbessert werden.

Erfindungsgemäß wird nun vorgeschlagen, dass die Regelungseinrichtung einen Speicher aufweist, in welchen zumindest eine Transfermatrix ablegbar ist. Die Transfermatrix beschreibt den Zusammenhang zwischen dem Lichteinfall und zumindest einer Eigenschaft der Lichtquelle. Die Eigenschaft der Lichtquelle kann beispielsweise ein Anstellwinkel einer Lamelle eines Blendschutzbehanges, die Stromstärke oder die elektrische Spannung einer elektrischen Leuchte, die

Abstrahlrichtung einer schwenkbaren und/oder fokussierbaren Leuchte oder ein weiterer Parameter sein. Insbesondere kann die Transfermatrix nichtlineare Zusammenhänge abbilden, wie diese beispielsweise beim Öffnungswinkel einer Lamellenjalousie vorkommen. Hierdurch kann die Regelung auch bei komplexen Beleuchtungsverhältnissen stabil gehalten werden. In einigen Ausführungsformen der Erfindung können die Koeffizienten einer Transfermatrix selbst wieder Funktionen sein.

In der nachfolgenden Beschreibung wird aus Vereinfachungsgründen in der Regel nur noch von einer Transferfunktion gesprochen. Dies soll in der Regel die Verwendung einer diskreten Transfermatrix mit einschließen.

Die Struktur der Transferfunktion ist von den im Raum vorhandenen Beleuchtungseinrichtungen und der Lage der vorgebbaren Stelle im Raum abhängig. Zu den Eigenschaften der Beleuchtungseinrichtungen gehört auch die Ausrichtung der Fassade sowie die Anzahl und Größe der Fensteröffnungen, wenn der Raum mit Tageslicht beaufschlagt werden kann. Dies bedeutet, dass die Transferfunktion erneut erstellt werden muss, wenn sich die Lage der vorgebbaren Stelle im Raum ändert, beispielsweise wenn ein Bildschirmarbeitsplatz an eine andere Stelle im Raum verschoben wird oder ein Exponat einer Ausstellungsfläche an einer anderen Stelle platziert wird oder eine andere oder eine zusätzliche Leuchte installiert wird.

Erfindungsgemäß wird daher weiter vorgeschlagen, dass die Regelungseinrichtung zumindest eine Transferfunktionserstellungseinrichtung aufweist, mit welcher zumindest eine Transfermatrix erstellbar ist. Die Erstellung der Transferfunktion erfolgt dabei automatisiert, wobei in unterschiedlichen Ausführungsformen der Erfindung unterschiedliche Trigger verwendet werden können, welche die Erstellung einer Transfermatrix durch die Transferfunktionserstellungseinrichtung auslösen. Im einfachsten Fall kann eine Transferfunktion erstellt werden, wenn die Vorrichtung das erste Mal mit elektrischer Energie versorgt wird. Alternativ oder zusätzlich kann eine Transferfunktion auch dann neu erstellt werden, wenn dies durch den Nutzer der Vorrichtung veranlasst wird und/oder wenn ein Ortswechsel der Vorrichtung erkannt wird, sodass die vorhandene Transferfunktion nicht mehr gültig ist. Die erfindungsgemäße Vorrichtung muss somit nicht aufwendig kalibriert werden, sodass in unterschiedlichen Räumen und auch nach Änderungen der Konfiguration stets optimale Ergebnisse erzielt werden können.

In einigen Ausführungsformen der Erfindung kann der zumindest eine optische Sensor Teil eines Bildschirms sein oder an einem Bildschirm befestigt sein. Der Bildschirm kann Teil eines Fernsehgerätes bzw. eines Heimkinosystems sein oder mit einem Computer verbunden werden, um auf diese Weise Teil eines Bildschirmarbeitsplatzes zu sein.

In einigen Ausführungsformen der Erfindung kann die Vorrichtung weiterhin zumindest eine Magnetfelderfassungseinrichtung enthalten. Die Magnetfelderfassungseinrichtung kann dazu eingesetzt werden, Richtung und Stärke des Erdmagnetfeldes zu ermitteln. Dies erlaubt einerseits, die Orientierung der Vorrichtung im Raum zu ermitteln und daraus auf die Einfallsrichtung natürlicher Lichtquellen zu schließen. In einigen Ausführungsformen der Erfindung kann die Magnetfelderfassungseinrichtung dazu verwendet werden, eine Bewegung der Vorrichtung oder eines damit ausgestatteten Gerätes zu erkennen. Dies kann dazu verwendet werden, die Neuerstellung der Transferfunktion durch die Transferfunktionserstellungseinrichtung zu triggern.

In einigen Ausführungsformen der Erfindung kann die Vorrichtung einen Beschleunigungssensor enthalten. Auch der Beschleunigungssensor kann dazu verwendet werden, eine Bewegung der Vorrichtung zu erkennen, welche beispielsweise auftritt, wenn die Vorrichtung oder ein mit ihr verbundenes Gerät an einen anderen Standort transportiert wird. Das Erkennen der Bewegung kann wiederum dazu verwendet werden, die Neuerstellung der Transferfunktion zu triggern, sodass der Lichteinfall auch am neuen Standort der Vorrichtung stets auch ohne Benutzereingriff optimiert wird.

In einigen Ausführungsformen der Erfindung kann die Vorrichtung eine Standortbestimmungseinrichtung aufweisen, mit welcher Geokoordinaten des zumindest einen optischen Sensors erfassbar sind. In einigen Ausführungsformen der Erfindung kann die Standortbestimmungseinrichtung beispielsweise ein Satellitennavigationssystem verwenden, beispielsweise GPS, GLONASS oder Galileo. In anderen Ausführungsformen der Erfindung kann die Standortbestimmungseinrichtung alternativ oder zusätzlich eine WLAN-basierte Ortung durchführen oder eine Ortung mittels eines GSM-Netzes. Die Standortbestimmungseinrichtung kann dazu verwendet werden, eine Bewegung der Vorrichtung zu erfassen, um die Neuerstellung der Transferfunktion zu triggern. Alternativ oder zusätzlich können Standortdaten dazu verwendet werden, den Einfluss der natürlichen Beleuchtung genauer zu bestimmen und hierdurch eine genauere Transferfunktion zu ermitteln. Das Regelverhalten der Vorrichtung kann dadurch verbessert sein.

In einigen Ausführungsformen der Erfindung kann die Vorrichtung weiterhin eine Einrichtung zur Erfassung von Datum und Uhrzeit enthalten. Die aktuelle Zeit in Zusammenhang mit Standortdaten kann dazu verwendet werden, den aktuellen Sonnenstand zu berechnen. Damit kann der Einfluss des natürlichen Lichtes auf die Beleuchtung an der vorgebbaren Stelle des Raumes besser abgeschätzt werden, sodass Jalousien oder Blendschutzvorrichtungen mit größerer Genauigkeit angesteuert werden können.

In einigen Ausführungsformen der Erfindung kann die Ansteuerung einer Jalousie bzw. einer Blendschutzvorrichtung noch genauer erfolgen, wenn die Vorrichtung eine Einrichtung zum Empfang von Wetterdaten enthält. Die Vorrichtung zum Empfang von Wetterdaten kann beispielsweise ein Thermometer und/oder einen Sonnensensor und/oder einen Tageslichtsensor und/oder eine Einrichtung zur Erfassung der Diffuslichteinstrahlung enthalten. In anderen Ausführungsformen der Erfindung können digitale Wetterdaten zugeführt werden, beispielsweise über ein LAN oder das Internet.

In einigen Ausführungsformen der Erfindung kann die Transferfunktionserstellungseinrichtung dazu eingerichtet sein, die einzelnen Koeffizienten der Transfermatrix durch ein Parameterschätzverfahren zu ermitteln. In einigen Ausführungsformen der Erfindung kann das Parameterschätzverfahren ausgewählt sein aus einem Least-Square-Verfahren oder einem Maximum-Likelihood-Verfahren. Diese Verfahren haben den Vorteil, dass eine Erstellung der Transferfunktion auch ohne gezielte Anregung der Beleuchtungseinrichtungen erfolgen kann. Die Transferfunktion kann durch das Parameterschätzverfahren im laufenden Betrieb optimiert werden, sodass mit zunehmender Betriebsdauer kontinuierlich bessere Ergebnisse erzielt werden.

In einigen Ausführungsformen der Erfindung kann die Transferfunktionserstellungseinrichtung dazu eingerichtet sein, die Erstellung der Transferfunktion und/oder der Transfermatrix durch Beeinflussung zumindest einer Lichtquelle und Messen der Auswirkung auf den Lichteinfall durchzuführen. Durch separate, sequenzielle Aktivierung der Beleuchtungseinrichtungen kann die Wirkung der einzelnen Beleuchtungssystemparameter auf die Sensoren erfasst werden. Hierdurch kann eine Grundeinstellung der Transferfunktion besonders rasch erstellt werden.

In einigen Ausführungsformen der Erfindung kann die Transferfunktionserstellungseinrichtung dazu eingerichtet sein, zur Erstellung der Transferfunktion und/oder der Transfermatrix Daten zur Lage und/oder zur Orientierung der zumindest einen Lichtquelle zur vorgebbaren Stelle des Raumes zu empfangen und die Auswirkung auf den Lichteinfall aus der Lage und/oder der Orientierung der zumindest einen Lichtquelle zu berechnen. Beispielsweise kann der Benutzer Raummaße, Lage und Größe einer Fensteröffnung sowie die Lage der vorgebbaren Stelle im Raum über eine Eingabemaske erfassen, sodass eine Grundeinstellung der Transferfunktion rechnerisch bestimmt werden kann. Diese kann optional im Betrieb weiter verfeinert werden, wobei auch weitere Informationen und Messwerte berücksichtigt werden können.

In einigen Ausführungsformen der Erfindung kann die Transferfunktionserstellungseinrichtung dazu eingerichtet sein, in einem ersten Verfahrensschritt eine Groberstellung der Transferfunktion vorzunehmen, welche einen Betrieb mit einer Basisfunktionalität ermöglicht und in mindestens einem nachfolgenden zweiten Verfahrensschritt eine Feinerstellung der Transferfunktion vorzunehmen, welche eine verbesserte Transferfunktion bereitstellt, mit welcher die Lichtsituation mit größerer Genauigkeit oder verbesserter Funktionalität geregelt werden kann. Dies erlaubt eine rasche Inbetriebnahme und bei zunehmender Einsatzzeit eine höhere Leistungsfähigkeit des Systems

In einigen Ausführungsformen der Erfindung kann eine Verkabelung bzw. eine Funkverbindung zwischen der Regelungseinrichtung und den Beleuchtungseinrichtungen auch entfallen. In diesem Fall kann die erfindungsgemäße Vorrichtung einem Nutzer Hinweise zur Anpassung der Beleuchtung geben, beispielsweise durch Anzeige auf dem Bildschirm. Der nutzer kann dann zum Beispiel die elektrische Beleuchtung einschalten oder einen Raffstore manuell öffnen. Diese Ausführungsform der Erfindung weist einen geringeren Installationsaufwand auf.

Nachfolgend soll die Erfindung anhand von Figuren ohne Beschränkung des allgemeinen Erfindungsgedankens näher erläutert werden. Dabei zeigt:

Figur 1 die Auswirkungen unterschiedlicher Ausrichtungen und unterschiedlicher Positionierung eines Bildschirmarbeitsplatzes auf den Lichteinfall.

Figur 2 zeigt ein Ausführungsbeispiel der vorliegenden Erfindung.

Figur 3 zeigt ein Blockschaltbild einer Ausführungsform der erfindungsgemäßen Vorrichtung.

Figur 4 zeigt ein Flussdiagramm des erfindungsgemäßen Verfahrens.

Figur 5 zeigt ein Flussdiagramm einer Weiterentwicklung des erfindungsgemäßen Verfahrens.

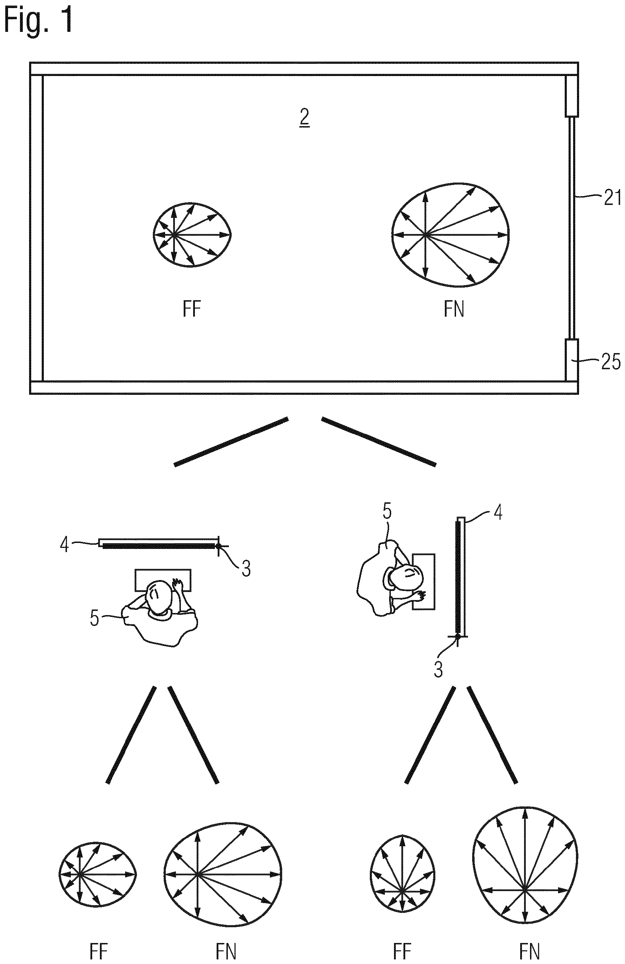

Figur 1 zeigt beispielhaft den Einfluss der durch ein Fenster 21 in einen Raum 2 fallenden Lichtmenge auf unterschiedliche vorgebbare Stellen eines Raumes.

Beispielhaft wird ein fensterferner Punkt FF betrachtet, welcher einen größeren Abstand zum Fenster 21 aufweist als ein fensternaher Punkt FN. Das Fenster 21 befindet sich in einer Fassade 25, welche durch ihre Orientierung bzw. Himmelsrichtung die in den Raum tretende Lichtmenge wesentlich beeinflusst. Aus Figur 1 ist insoweit ersichtlich, dass an der Stelle FN eine größere Lichtintensität gemessen wird als an der Stelle FF. Weiterhin ist die Lichtmenge bei Blickrichtung zum Fenster größer als bei Blickrichtung in orthogonaler Richtung.

Figur 1 erläutert weiter, dass ein Bildschirm 4 entweder orthogonal zu der durch das Fenster 21 aufgespannten Ebene aufgestellt werden kann oder aber parallel. Dementsprechend sitzt der Nutzer 5 bei Benutzung bzw. Betrachtung des Monitors 4 entweder mit der Blickrichtung orthogonal zum Fenster oder jedoch mit der Blickrichtung parallel zum Fenster.

Der Monitor 4 ist mit einem optischen Sensor 3 ausgestattet, welcher die Intensität und Richtung des durch das Fenster 21 eintretenden Lichtes erfasst. Selbstverständlich sind diese Ausrichtungen nur exemplarisch zu verstehen und beschränken den Gegenstand der Erfindung nicht.

Figur 1 illustriert insoweit, dass bei paralleler Aufstellung des Monitors 4 zum Fenster 21 das Licht im Wesentlichen frontal auf die Rückseite des Monitors trifft. Dabei ist die Lichtintensität an der Stelle FF geringer als an der Stelle FN. Bei orthogonaler Aufstellung des Monitors 4 trifft das Licht im Wesentlichen parallel zur Bildschirmoberfläche des Monitors 4 ein. Auch in diesem Fall ist die Lichtintensität an der Stelle FF geringer als an der Stelle FN.

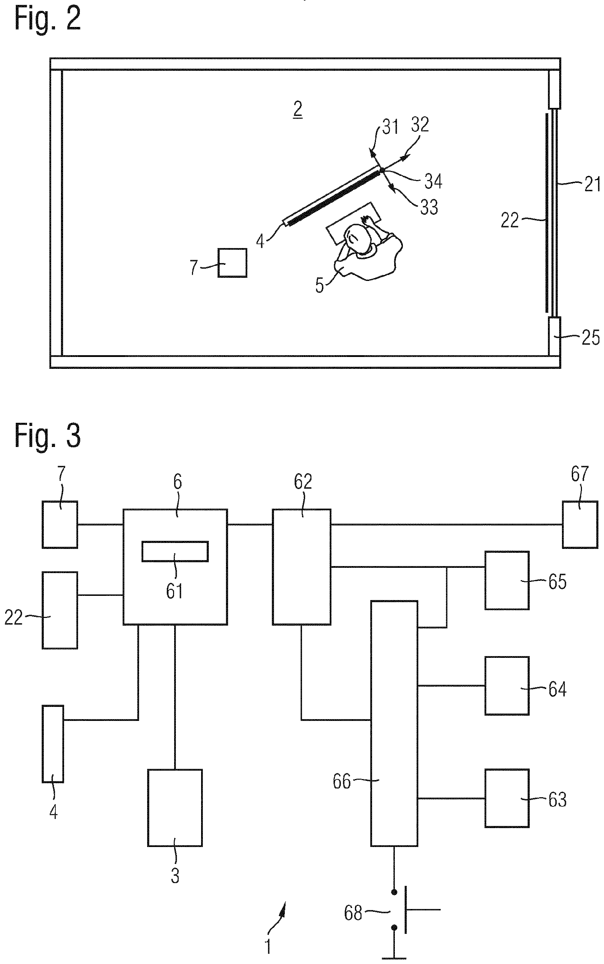

Figur 2 erläutert eine ähnliche Situation wie in Figur 1 dargestellt. Dementsprechend sind gleiche Bestandteile der Erfindung mit gleichen Bezugszeichen versehen. Die nachfolgende Darstellung beschränkt sich auf die wesentlichen Unterschiede.

Gemäß Figur 2 ist das Fenster 21 mit einem Blendschutzbehang 22 versehen. Die durch den Blendschutzbehang hindurch tretende Lichtmenge kann durch ein elektrisches Steuersignal beeinflusst werden, beispielsweise durch Änderung des Bedeckungsgrades der Fensteröffnung 21 durch den Blendschutzbehang oder durch Änderung des Drehwinkels bzw. Anstellwinkels von Lamellen. Weiterhin enthält der Raum 2 eine elektrische Leuchte 7, deren Lichtintensität und/oder Farbe durch ein elektrisches Steuersignal beeinflusst werden kann. Somit können durch mehrere elektrische Steuersignale der Lichteinfall auf den Bildschirm 4 beeinflusst werden. Dies erfolgt durch die erfindungsgemäße Vorrichtung und nach dem erfindungsgemäßen Verfahren automatisch optimiert, sodass der Nutzer 5 optimierte Arbeitsbedingungen vorfindet.

Figur 2 zeigt weiter vier optische Sensoren 31, 32, 33 und 34, welche den Lichteinfall in vier Raumrichtungen bestimmen, nämlich vom Bildschirm 4 aus gesehen vorne (33), hinten (31), rechts (32) und oben (34). Hierdurch können einzelne blendende Lichtquellen erkannt und entsprechend angesteuert werden, sodass unnötige Reflexionen oder Kontrastminderungen auf dem Bildschirm 4 durch starken Lichteinfall vermieden werden können. Gleichzeitig wird eine starke Abdunkelung des Raumes vermieden. Somit können ungünstige Leuchtdichteverhältnisse im Gesichtsfeld vermieden werden, insbesondere starke Kontrastunterschiede zwischen Arbeitsbereich und Umfeld.

In einigen Ausführungsformen der Erfindung kann die Sensorik neben der beschriebenen Ausregelung des Lichteinfalls zusätzlich die bekannte tageslichtabhängige Regelung künstlicher Lichtquellen sowie eine optionale Präsenzerfassung mit übernehmen. Hierdurch kann Energie eingespart werden und/oder die Beleuchtungssituation optimiert werden.

Figur 3 zeigt ein Blockschaltbild der erfindungsgemäßen Vorrichtung 1 zur Regelung des Lichteinfalls. Das Blockschaltbild zeigt sowohl Hardware- als auch Softwarekomponenten. Einige Komponenten der erfindungsgemäßen Vorrichtung können wahlweise in Hardware realisiert werden oder in anderen Ausführungsformen der Erfindung als Software ausgeführt sein, welche auf einem Mikroprozessor oder einem Microcontroller ausführbar ist und ein erfindungsgemäßes Verfahren durchführt, wenn die Software auf einem Mikroprozessor läuft.

Die Regelungseinrichtung 6 weist einen Speicher 61 auf, in welchem zumindest eine Transferfunktion und/oder eine Transfermatrix ablegbar ist. Hierzu kann der Speicher in einigen Ausführungsformen der Erfindung ein nicht-flüchtiger Speicher sein, um eine Neuerstellung der Transferfunktion nach jedem Stromlosschalten der Vorrichtung 1 zu vermeiden.

Die Regelungseinrichtung 6 kann in an sich bekannter Weise mittels eines PD-, eines PID- oder eines PI-Reglers die Beleuchtungseinrichtungen 7 und 22 so beeinflussen, dass der Ist-Wert des Lichteinfalls an den gewünschten Soll-Wert geführt wird. In einigen Ausführungsformen der Erfindung kann die Regelungseinrichtung 6 ein neuronales Netz oder Fuzzy-Logik implementieren, um eine genauere Regelung auch bei unscharfen oder sich widersprechenden Eingangsgrößen zu ermöglichen.

Die Regelungseinrichtung 6 gibt analoge oder digitale Steuersignale aus, welche die Lichtquellen 7 und 22 sowie optional den Monitor 4 beeinflussen. Die Steuersignale können in einigen Ausführungsformen der Erfindung auch drahtlos übertragen werden, beispielsweise über einen Kurzstreckenfunk, ein WLAN oder mittels infraroter Trägersignale. Dies erlaubt die besonders einfache Integration der Vorrichtung 6 in die Gebäudetechnik des Raumes 2, ohne dass aufwändige Installationsarbeiten zur Verkabelung erforderlich sind.

Weiterhin wird der Regelungseinrichtung 6 das Signal zumindest eines Sensors 3 zugeführt. Der Sensor 3 erfasst Intensität und/oder spektrale Zusammensetzung einfallenden Lichtes in zumindest einer Raumrichtung. In einigen Ausführungsformen der Erfindung kann der Sensor 3 dazu eingerichtet sein, Licht aus unterschiedlichen Richtungen zu erfassen, wie oben bereits in Zusammenhang mit Figur 2 dargestellt. Auch die Messwerte des Sensors 3 können der Regelungseinrichtung 6 analog oder digital zugeführt werden. Der Sensor 3 kann ebenfalls verkabelt oder drahtlos mit der Regelungseinrichtung 6 verbunden sein. Hierfür weist die Regelungseinrichtung 6 entsprechende analoge oder digitale Schnittstellen auf.

Die Regelungseinrichtung 6 wirkt mit einer Transferfunktionserstellungseinrichtung 62 zusammen. Die Transferfunktionserstellungseinrichtung 62 kann integraler Bestandteil der Regelungseinrichtung 6 sein, insbesondere wenn diese als Software realisiert ist und auf demselben Mikroprozessor läuft wie der Regelalgorithmus der Regelungseinrichtung 6. In anderen Ausführungsformen der Erfindung kann die Transferfunktionserstellungseinrichtung auch ein separates Bauteil sein, welches beispielsweise mittels eines FPGAs, eines Mikroprozessors oder eines Microcontrollers eine Transferfunktion bestimmt und im Speicher 61 ablegt.

Die Transferfunktionserstellungseinrichtung 62 kann in einer Ausführungsform der Erfindung Messwerte des Sensors 3 zur Erstellung der Transferfunktion verwenden. Beispielsweise kann durch ein Parameterschätzverfahren eine fortlaufende Optimierung der Transferfunktion im laufenden Betrieb der Regelungseinrichtung 6 erfolgen. In anderen Ausführungsformen der Erfindung kann die Transferfunktionserstellungseinrichtung weitere Daten verwenden, um eine bessere Transferfunktion zu erstellen. Beispielsweise können Geokoordinaten aus einer Standortbestimmungseinrichtung 65 verwendet werden, um die zu erwartende Sonneneinstrahlung und den zu erwartenden Sonnenstand vorherzusagen. In einigen Ausführungsformen der Erfindung können auch Wetterdaten aus einer Wetterdatenerfassungseinrichtung 67 herangezogen werden, um tages- oder jahreszeitliche Schwankungen sowie die aktuelle Großwetterlage in die Regelung einzubeziehen.

Die Erstellung der Transferfunktion durch die Transferfunktionserstellungseinrichtung 62 wird durch eine Triggereinrichtung 66 ausgelöst. Die Triggereinrichtung 66 erhält zumindest ein Eingangssignal, um die Notwendigkeit der Neuerstellung bzw. der erstmaligen Erstellung der Transferfunktion zu signalisieren. In einigen Ausführungsformen der Erfindung können, wie in Figur 3 dargestellt, mehrere Sensoren mit der Triggereinrichtung 66 verbunden sein, um auf diese Weise mehrere Ereignisse zu detektieren, welche eine Neuerstellung der Transferfunktion notwendig machen.

Im einfachsten Fall kann die Erstellung der Transferfunktion 66 vom Benutzer durch einen Taster 68 ausgelöst werden. Alternativ oder zusätzlich können die Daten einer Magnetfelderfassungseinrichtung 63 herangezogen werden, um eine Bewegung der Vorrichtung 1 zu detektieren. Daraus kann geschlossen werden, dass die Vorrichtung an ihrem neuen Standort anderen Beleuchtungsbedingungen ausgesetzt ist und eine Neuerstellung der Transferfunktion notwendig ist. In einigen Ausführungsformen der Erfindung können die Daten des Magnetfeldsensors 63 auch herangezogen werden, um die Orientierung der Vorrichtung im Raum und damit relativ zu ortsfesten Lichtquellen, wie beispielsweise Fensteröffnungen, zu ermitteln.

In wiederum anderen Ausführungsformen der Erfindung kann ein mikromechanischer Beschleunigungssensor 64 herangezogen werden, um eine Bewegung der Vorrichtung 1 zu erkennen, welche wie vorstehend beschrieben eine Neuerstellung der Transferfunktion notwendig machen kann. Der Beschleunigungssensor 64 kann als mikromechanischer Sensor auf der Platine der Vorrichtung 1 integriert sein.

Schließlich können auch die Daten der Standorterfassungseinrichtung 65 herangezogen werden, um die Neuerstellung der Transfermatrix zu triggern.

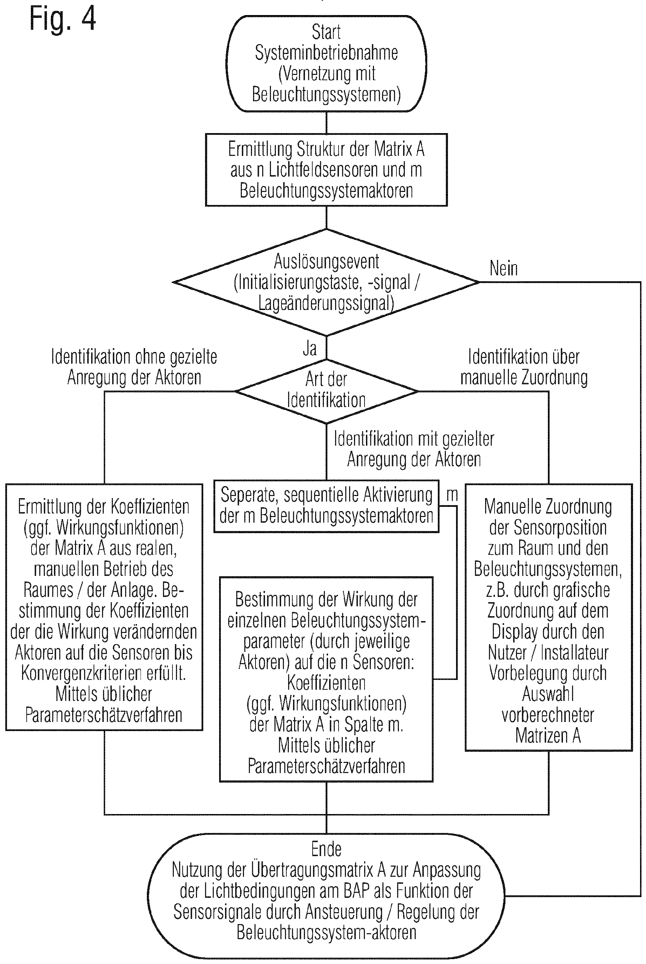

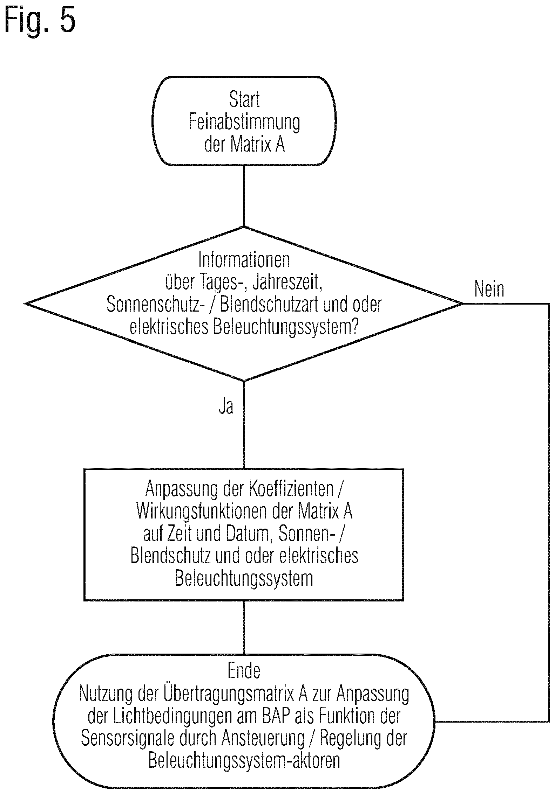

In den Figuren 4 und 5 werden Flussdiagramme des erfindungsgemäßen Verfahrens näher erläutert. Wie Figur 2 zeigt, startet das erfindungsgemäße Verfahren mit der Inbetriebnahme des Systems. Dies erfordert die erstmalige Vernetzung mit einem Beleuchtungssystem, beispielsweise einer Leuchte oder einer Jalousie bzw. einem Blendschutzbehang.

Im nächsten Verfahrensschritt erkennt die Vorrichtung automatisiert die Anzahl der Lichtquellen und die Anzahl der angeschlossenen Sensoren, beispielsweise, ob ein ortsaufgelöster optischer Sensor verwendet wird, welcher die Helligkeit in unterschiedlichen Raumrichtungen erfassen kann. Ebenso erkennt die Vorrichtung die Struktur der Beleuchtungseinrichtungen, d. h. die Anzahl der Leuchten im Raum, die Anzahl der Fensteröffnungen und die Anzahl und Art der Blendschutzbehänge. Daraus wird die Struktur der Transferfunktion bzw. der Transfermatrix festgelegt. Beispielsweise kann ein System, welches den Lichteinfall in vier Raumrichtungen $I_h$, $I_o$, $I_v$ und $I_r$ misst und welches vier Beleuchtungsparameter steuert wie folgt beschrieben werden:

$$\begin{pmatrix} I_h \\ I_o \\ I_v \\ I_r \end{pmatrix} = \begin{pmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{pmatrix} \cdot \begin{pmatrix} B_{Jaz} \\ B_{J\alpha} \\ B_{DL} \\ B_{mh} \end{pmatrix}$$

wobei $B_{jaz}$ und $B_{j\alpha}$ die Position und den Anstellwinkel einer Jalousie beschreiben, $B_{dl}$ die einer Lampe zugeführte Leistung beschreibt und $B_{mh}$ die Helligkeit eines Monitors beschreibt.

Der Intensitätsvektor **I** ist abhängig von der Anzahl der Sensoren und dient dazu, als Führungsgröße der Regelung verwendet zu werden. Der Vektor der Steuersignale **B** ist vom jeweiligen Beleuchtungssystem des Raumes abhängig. Die beide Größen verknüpfende Transfermatrix **a** beschreibt die Auswirkungen einer Änderung des Beleuchtungssystems auf den jeweiligen Lichteinfall in den vier Raumrichtungen.

Im nächsten Verfahrensschritt wird die Erstellung der Transfermatrix getriggert. Als Triggersignal kann beispielsweise ein Initialisierungssignal bzw. die Bedienung eines Rasters 68 verwendet werden. In anderen Ausführungsformen kann die Lageänderung der Vorrichtung 1 eine Neuerstellung der Transfermatrix auslösen.

Nachdem das Triggersignal erkannt wurde, durchläuft die Transferfunktionserstellungseinrichtung eine oder mehrere Routinen zur Ermittlung der einzelnen Koeffizienten der Transfermatrix. Beispielsweise kann dies durch ein Parameterschätzverfahren ohne Anregung der Beleuchtungseinrichtungen im normalen Betrieb der Vorrichtung erfolgen.

Alternativ oder zusätzlich können einzelne Beleuchtungsparameter angesteuert werden, wobei die Vorrichtung die Auswirkung auf die Messwerte einzelner optischer Sensoren erfasst. Auch in diesem Fall können die einzelnen Koeffizienten der Transfermatrix durch ein Parameterschätzverfahren ermittelt bzw. optimiert werden. Alternativ oder zusätzlich kann der Nutzer 5 eine manuelle Zuordnung der Sensorposition zum Raum und den jeweiligen Beleuchtungssystemen vornehmen. Dies kann beispielsweise durch grafische Zuordnung auf einem Display erfolgen. Hieraus können Koeffizienten der Transfermatrix berechnet werden, welche eine sinnvolle Vorbelegung ermöglichen. Die so vorbelegten Koeffizienten können durch weitere Verfahren zusätzlich optimiert werden.

Nachdem die Transfermatrix zur Verfügung steht, kann diese zur Anpassung der Lichtbedingungen an Arbeitsplatz als Funktion der Sensorsignale durch Ansteuerung bzw. Regelung der Beleuchtungssysteme verwendet werden.

In einigen Ausführungsformen der Erfindung kann die Transferfunktion bzw. die einzelnen Koeffizienten der Transfermatrix im laufenden Betrieb der Vorrichtung fortlaufend optimiert werden, sodass dem Benutzer mit längerer Zeitdauer ein immer besseres Ergebnis geboten wird. Hierzu kann entweder durch Benutzereingriff, durch Zeitablauf oder durch ein Steuersignal das in Figur 5 dargestellte Verfahren getriggert werden. Zu Beginn der Feinabstimmung der Transfermatrix überprüft das System, ob zusätzliche Informationen über Tages- oder Jahreszeit, die Art, den Typ oder den Hersteller des Sonnenschutzsystems und/oder Art, Typ oder Abstrahlcharakteristik der elektrischen Beleuchtung zur Verfügung stehen. Sofern dies der Fall ist, werden die Koeffizienten der Transfermatrix weiter optimiert. Sofern keine zusätzlichen Daten zur Verfügung stehen, bricht das Programm ab und nutzt die vorhandene Transfermatrix weiter. Andernfalls wird eine optimierte Transfermatrix verwendet, nachdem diese berechnet wurde.

Selbstverständlich ist die Erfindung nicht auf die in den Figuren dargestellte Ausführungsform beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen. Merkmale aus unterschiedlichen Ausführungsformen der Erfindung können jederzeit kombiniert werden, um so weitere Ausführungsformen der Erfindung zu erhalten.

**Patentansprüche**

1. Vorrichtung (1) zur Regelung des Lichteinfalls an

   zumindest einer vorgebbaren Stelle (FF, FN) eines Raumes (2), enthaltend
   zumindest einen optischen Sensor (3, 31, 32, 33, 34), der dazu eingerichtet ist, einen Ist-Wert des Lichteinfalls zu bestimmen, und
   zumindest eine Regelungseinrichtung (6), welche dazu eingerichtet ist, ein Steuersignal für zumindest eine Lichtquelle (7, 22) zu erzeugen, und
   zumindest eine Lichtquelle (7, 22), welche dazu eingerichtet ist, in Abhängigkeit des Steuersignals den Lichteinfall zu beeinflussen, **dadurch gekennzeichnet, dass**
   die Regelungseinrichtung (6) einen Speicher (61) aufweist, in welchen zumindest eine Transfermatrix ablegbar ist, welche einen Zusammenhang zwischen dem Lichteinfall und zumindest einer Eigenschaft der Lichtquelle (7, 22) beschreibt, wobei
   die Regelungseinrichtung (6) zumindest eine Transferfunktionserstellungseinrichtung (62) aufweist, mit welcher zumindest eine Transfermatrix erstellbar ist, wobei die Transferfunktionserstellungseinrichtung dazu eingerichtet ist, folgende Schritte auszuführen:

     Automatisiertes Erkennen der Anzahl der Lichtquellen und der Anzahl und Art der Sensoren,
     Festlegen der Struktur der Transfermatrix **a,** welche die Auswirkungen einer Änderung zumindest einer Eigenschaft der Lichtquelle (7, 22) auf den jeweiligen Lichteinfall beschreibt,
     Triggern der Erstellung der Transfermatrix **a,**
     Durchlaufen einer oder mehrerer Routinen zur Ermittlung der einzelnen Koeffizienten der Transfermatrix **a.**

2. Vorrichtung nach Anspruch 1, **dadurch gekennzeichnet, dass** der zumindest eine optische Sensor (3) eine Mehrzahl von Photodioden (31, 32, 33) und/oder zumindest ein Colorimeter enthält.

3. Vorrichtung nach Anspruch 1 oder 2, weiterhin enthaltend zumindest eine Magnetfelderfassungseinrichtung (63) und /oder zumindest einen Beschleunigungssensor (64) und/oder zumindest eine Standortbestimmungseinrichtung (65), mit welcher Geokoordinaten des zumindest einen optischen Sensors (3, 31, 32, 33, 34) erfassbar sind.

4. Vorrichtung nach Anspruch 3, weiterhin enthaltend eine Triggereinrichtung (66), mit welcher bei Erkennen einer Bewegung des zumindest einen optischen Sensors (3, 31, 32, 33, 34) eine Überprüfung und/oder erneute Erstellung der Transferfunktion und/oder der Transfermatrix triggerbar ist.

**5.** Vorrichtung nach einem der Ansprüche 1 bis 4, **dadurch gekennzeichnet, dass** die zumindest eine Lichtquelle (7, 22) ausgewählt ist aus einen Fenster (21) mit zumindest einer Sonnenschutzvorrichtung (22) und/oder zumindest einer elektrischen Leuchte (7) und/oder zumindest einem Bildschirm (4).

**6.** Vorrichtung nach einem der Ansprüche 1 bis 5, **dadurch gekennzeichnet, dass** die Transferfunktionserstellungseinrichtung (62) dazu eingerichtet ist, die einzelnen Koeffizienten der Transfermatrix **a** durch ein Parameterschätzverfahren zu ermitteln.

**7.** Vorrichtung nach einem der Ansprüche 1 bis 6, **dadurch gekennzeichnet, dass** die Transferfunktionserstellungseinrichtung (62) dazu eingerichtet ist, die Erstellung der Transferfunktion und/oder der Transfermatrix durch Beeinflussung zumindest einer Lichtquelle (7, 22) und Messen der Auswirkung auf den Lichteinfall durchzuführen.

**8.** Vorrichtung nach einem der Ansprüche 1 bis 7, **dadurch gekennzeichnet, dass** die Transferfunktionserstellungseinrichtung (62) dazu eingerichtet ist, zur Erstellung der Transferfunktion und/oder der Transfermatrix Daten zur Lage und/oder zur Orientierung der zumindest einen Lichtquelle (7, 21, 22) zur vorgebbaren Stelle (FF, FN) des Raumes (2) zu empfangen und die Auswirkung auf den Lichteinfall aus der Lage und/oder der Orientierung der zumindest einen Lichtquelle (7, 21, 22) zu berechnen.

**9.** Verfahren zur Regelung des Lichteinfalls an zumindest einer vorgebbaren Stelle (FF, FN) eines Raumes (2), bei welchem mittels zumindest eines optischen Sensors (3, 31, 32, 33, 34) der Ist-Wert des Lichteinfalls bestimmt und zumindest eine Lichtquelle (7, 22) beinflusst wird, um einen vorgebbaren Sollwert des Lichteinfalls zu erreichen, **dadurch gekennzeichnet, dass** zwischen dem durch einen Intensitätsvektor **I** beschriebenen Lichteinfall und zumindest einer durch einen Vektor von Steuersignalen **B** beschriebenen Eigenschaft der Lichtquelle (7, 22) mittels einer Transfermatrix **a** ein Zusammenhang beschrieben wird, wobei die Transfermatrix autoadaptiv durch folgende Schritte erstellt wird:

Automatisiertes Erkennen der Anzahl der Lichtquellen und der Anzahl und Art der Sensoren, Festlegen der Struktur der Transfermatrix **a,** welche die Auswirkungen einer Änderung zumindest einer Eigenschaft der Lichtquelle (7, 22) auf den jeweiligen Lichteinfall beschreibt, Triggern der Erstellung der Transfermatrix **a,** Durchlaufen einer oder mehrerer Routinen zur Ermittlung der einzelnen Koeffizienten der Transfermatrix **a** durch die Transferfunktionserstellungseinrichtung.

**10.** Verfahren nach Anspruch 9, bei welchem eine Bewegung des zumindest einen optischen Sensors (3, 31, 32, 33, 34) mittels zumindest einer Magnetfelderfassungseinrichtung (63) und /oder zumindest einem Beschleunigungssensor (64) erfasst und damit eine Überprüfung und/oder erneute Erstellung der Transferfunktion und/oder der Transfermatrix getriggert wird.

**11.** Verfahren nach einem der Ansprüche 9 oder 10, **dadurch gekennzeichnet, dass** die zumindest eine Lichtquelle ausgewählt ist aus einen Fenster (21) mit zumindest einer Sonnenschutzvorrichtung (22) und/oder zumindest einer elektrischen Leuchte (7) und/oder zumindest einem Bildschirm (4).

**12.** Verfahren nach einem der Ansprüche 9 bis 11, **dadurch gekennzeichnet, dass** die einzelnen Koeffizienten der Transfermatrix durch ein Parameterschätzverfahren ermittelt werden.

**13.** Verfahren nach einem der Ansprüche 9 bis 12, **dadurch gekennzeichnet, dass** zur Erstellung der Transfermatrix die zumindest eine Lichtquelle (7, 22) beinflusst und die Auswirkung auf den Lichteinfall gemessen wird.

**14.** Verfahren nach einem der Ansprüche 9 bis 13, **dadurch gekennzeichnet, dass** zur Erstellung der Transfermatrix die Lage und/oder die Orientierung der zumindest einen Lichtquelle (7, 22) zur vorgebbaren Stelle (FF, FN) des Raumes (2) ermittelt und die Auswirkung auf den Lichteinfall aus der Lage und/oder der Orientierung und/oder dem Abstrahlverhalten der zumindest einen Lichtquelle (7, 22) berechnet wird.

**15.** Verfahren nach einem der Ansprüche 9 bis 14, **dadurch gekennzeichnet, dass** bei der Erstellung der Transfermatrix geografische Daten und/oder die Tageszeit und/oder die Jahreszeit und/oder die Witterungsbedingungen berücksichtigt werden
und/oder
dass die Koeffizienten der Transfermatrix Funktionen sind.

## Claims

**1.** Apparatus (1) for controlling the incidence of light at least at one predeterminable point (FF, FN) of a room (2), containing

at least one optical sensor (3, 31, 32, 33, 34) which is designed to determine an actual value of the incidence of light, and
at least one control device (6) which is designed to generate a control signal for at least one light source (7, 22), and
at least one light source (7, 22) which is designed to influence the incidence of light on the basis of the control signal, **characterized in that**
the control device (6) has a memory (61), in which at least one transfer matrix can be stored, which describes a relationship between the incidence of light and at least one property of the light source (7, 22),
the control device (6) having at least one transfer function creation device (62), by means of which at least one transfer matrix can be created,
the transfer function creation device being designed to carry out the following steps:

automatic detection of the number of light sources and the number and type of sensors,
determining the structure of transfer matrix **a**, which describes the effects of a change in at least one property of the light source (7, 22) on the particular incidence of light,
triggering the creation of transfer matrix **a**,
running through one or more routines to determine the individual coefficients of transfer matrix **a**.

2. Apparatus according to claim 1, **characterized in that** the at least one optical sensor (3) contains a plurality of photodiodes (31, 32, 33) and/or at least one colorimeter.

3. Apparatus according to claim 1 or 2, further containing at least one magnetic field detection device (63) and/or at least one acceleration sensor (64) and/or at least one location determination device (65), by means of which geographic coordinates of the at least one optical sensor (3, 31, 32, 33, 34) can be detected.

4. Apparatus according to claim 3, further containing a trigger device (66), by means of which a check and/or renewed creation of the transfer function and/or the transfer matrix can be triggered when a movement of the at least one optical sensor (3, 31, 32, 33, 34) is detected.

5. Apparatus according to any one of claims 1 to 4, **characterized in that** the at least one light source (7, 22) is selected from a window (21) having at least one sun protection apparatus (22) and/or at least one electric light (7) and/or at least one screen (4).

6. Apparatus according to any one of claims 1 to 5, **characterized in that** the transfer function creation device (62) is designed to determine the individual coefficients of transfer matrix **a** by means of a parameter estimation method.

7. Apparatus according to any one of claims 1 to 6, **characterized in that** the transfer function creation device (62) is designed to carry out the creation of the transfer function and/or the transfer matrix by influencing at least one light source (7, 22) and measuring the effects on the incidence of light.

8. Apparatus according to any one of claims 1 to 7, **characterized in that** the transfer function creation device (62) is designed to receive data on the position and/or the orientation of the at least one light source (7, 21, 22) with regard to the predefinable point (FF, FN) of the room (2) in order to create the transfer function and/or the transfer matrix and to calculate the effect on the incidence of light from the position and/or the orientation of the at least one light source (7, 21, 22).

9. Method for controlling the incidence of light at least at one predefinable point (FF, FN) of a room (2), in which the actual value of the incidence of light is determined by means of at least one optical sensor (3, 31, 32, 33, 34) and at least one light source (7, 22) is influenced in order to achieve a predefinable desired value of the incidence of light, **characterized in that**
a relationship is described between the incidence of light described by an intensity vector I and at least one property of the light source (7, 22) described by a vector of control signals **B**, the transfer matrix being created auto-adaptively by the following steps:

automatic detection of the number of light sources and the number and type of sensors,
determining the structure of transfer matrix **a**, which describes the effects of a change in at least one property of the light source (7, 22) on the particular incidence of light,
triggering the creation of transfer matrix **a,**
running through one or more routines for determining the individual coefficients of transfer matrix **a** by the transfer function creation device.

10. Method according to claim 9, in which a movement of the at least one optical sensor (3, 31, 32, 33, 34) is detected by means of at least one magnetic field detection device (63) and/or at least one acceleration sensor (64) and thus a check and/or renewed creation of the transfer function and/or the transfer matrix is triggered.

**11.** Method according to any one of claims 9 or 10, **characterized in that** the at least one light source is selected from a window (21) having at least one sun protection apparatus (22) and/or at least one electric light (7) and/or at least one screen (4).

**12.** Method according to any one of claims 9 to 11, **characterized in that** the individual coefficients of the transfer matrix are determined by a parameter estimation method.

**13.** Method according to any one of claims 9 to 12, **characterized in that**, in order to create the transfer matrix, the at least one light source (7, 22) is influenced and the effect on the incidence of light is measured.

**14.** Method according to any one of claims 9 to 13, **characterized in that**, in order to create the transfer matrix, the position and/or the orientation of the at least one light source (7, 22) in relation to the predefinable point (FF, FN) of the room (2) is determined and the effect on the incidence of light is calculated from the position and/or the orientation and/or the radiation behavior of the at least one light source (7, 22).

**15.** Method according to any one of claims 9 to 14, **characterized in that** geographic data and/or the time of day and/or the season and/or the weather conditions are taken into account when creating the transfer matrix and/or
**in that** the coefficients of the transfer matrix are functions.

**Revendications**

**1.** Dispositif (1) de régulation de l'incidence de la lumière en au moins un endroit (FF, FN) prédéfinissable d'un local (2), comprenant

au moins un capteur optique (3, 31, 32, 33, 34) qui est conçu pour définir une valeur réelle de l'incidence de la lumière, et
au moins un organe de régulation (6) qui est conçu pour générer un signal de commande pour au moins une source de lumière (7, 22), et
au moins une source de lumière (7, 22) qui est conçue pour influencer l'incidence de la lumière en fonction du signal de commande,
**caractérisé en ce que**
l'organe de régulation (6) présente une mémoire (61) dans laquelle peut être stockée au moins une matrice de transfert qui décrit une relation entre l'incidence de la lumière et au moins une propriété de la source de lumière (7, 22),
l'organe de régulation (6) présentant au moins un organe de création de fonction de transfert (62) permettant de créer au moins une matrice de transfert, l'organe de création de fonction de transfert étant conçu pour exécuter les étapes suivantes consistant à :

détecter automatiquement le nombre de sources de lumière et le nombre et du type de capteurs,
fixer la structure de la matrice de transfert **a,** qui décrit les effets d'une modification d'au moins une propriété de la source de lumière (7, 22) sur l'incidence respective de la lumière,
déclencher la création de la matrice de transfert **a,**
faire exécuter une ou plusieurs routines de détermination des coefficients individuels de la matrice de transfert **a.**

**2.** Dispositif selon la revendication 1, **caractérisé en ce que** ledit au moins un capteur optique (3) comprend une pluralité de photodiodes (31, 32, 33) et/ou au moins un colorimètre.

**3.** Dispositif selon la revendication 1 ou 2, comprenant en outre au moins un organe de détection de champ magnétique (63) et/ou au moins un capteur d'accélération (64) et/ou au moins un organe de localisation (65) permettant de détecter des coordonnées géographiques dudit au moins un capteur optique (3, 31, 32, 33, 34).

**4.** Dispositif selon la revendication 3, comprenant en outre un organe de déclenchement (66) permettant de déclencher, lors de la détection d'un mouvement dudit au moins un capteur optique (3, 31, 32, 33, 34), une vérification et/ou une nouvelle création de la fonction de transfert et/ou de la matrice de transfert.

**5.** Dispositif selon l'une des revendications 1 à 4, **caractérisé en ce que** ladite au moins une source de lumière (7, 22) est choisie parmi une fenêtre (21) comportant au moins un dispositif de protection solaire (22), et/ou au moins un luminaire électrique (7) et/ou au moins un écran d'affichage (4) .

**6.** Dispositif selon l'une des revendications 1 à 5, **caractérisé en ce que** l'organe de création de fonction de transfert (62) est conçu pour déterminer les coefficients individuels de la matrice de transfert a par un procédé d'estimation de paramètres.

**7.** Dispositif selon l'une des revendications 1 à 6, **caractérisé en ce que** l'organe de création de fonction de transfert (62) est conçu pour réaliser la création de la fonction de transfert et/ou de la matrice de transfert en influençant au moins une source de lumière (7, 22) et en mesurant l'effet sur l'incidence de la lumière.

**8.** Dispositif selon l'une des revendications 1 à 7, **caractérisé en ce que**, en vue de créer la fonction de transfert et/ou la matrice de transfert, l'organe de création de fonction de transfert (62) est conçu pour recevoir des données relatives à la position et/ou à l'orientation de ladite au moins une source de lumière (7, 21, 22) par rapport à l'endroit (FF, FN) prédéfinissable du local (2) et pour calculer l'effet sur l'incidence de la lumière à partir de la position et/ou de l'orientation de ladite au moins une source de lumière (7, 21, 22).

**9.** Procédé de régulation de l'incidence de la lumière en au moins un endroit (FF, FN) prédéfinissable d'un local (2),

dans lequel la valeur réelle de l'incidence de la lumière est définie au moyen d'au moins un capteur optique (3, 31, 32, 33, 34), et au moins une source de lumière (7, 22) est influencée pour atteindre une valeur de consigne prédéfinissable de l'incidence de la lumière, **caractérisé en ce que**

une relation entre l'incidence de la lumière, décrite par un vecteur d'intensité **I,** et au moins une propriété de la source de lumière (7, 22), décrite par un vecteur de signaux de commande **B,** est décrite au moyen d'une matrice de transfert **a,** la matrice de transfert étant créée de manière auto-adaptative par les étapes suivantes consistant à :

détecter automatiquement le nombre de sources de lumière et le nombre et le type de capteurs,

fixer la structure de la matrice de transfert **a,** qui décrit les effets d'une modification d'au moins une propriété de la source de lumière (7, 22) sur l'incidence respective de la lumière,

déclencher la création de la matrice de transfert **a,**

faire exécuter une ou plusieurs routines de détermination des coefficients individuels de la matrice de transfert **a** par l'organe de création de fonction de transfert.

**10.** Procédé selon la revendication 9, dans lequel un mouvement dudit au moins un capteur optique (3, 31, 32, 33, 34) est détecté au moyen d'au moins un organe de détection de champ magnétique (63) et/ou d'au moins un capteur d'accélération (64), et ainsi une vérification et/ou une nouvelle création de la fonction de transfert et/ou de la matrice de transfert est déclenchée.

**11.** Procédé selon l'une des revendications 9 ou 10, **caractérisé en ce que** ladite au moins une source de lumière est choisie parmi une fenêtre (21), comportant au moins un dispositif de protection solaire (22), et/ou au moins un luminaire électrique (7) et/ou au moins un écran d'affichage (4).

**12.** Procédé selon l'une des revendications 9 à 11, **caractérisé en ce que** les coefficients individuels de la matrice de transfert sont déterminés par un procédé d'estimation de paramètres.

**13.** Procédé selon l'une des revendications 9 à 12, **caractérisé en ce que** pour créer la matrice de transfert, ladite au moins une source de lumière (7, 22) est influencée, et l'effet sur l'incidence de la lumière est mesuré.

**14.** Procédé selon l'une des revendications 9 à 13, **caractérisé en ce que**, en vue de créer la matrice de transfert, la position et/ou l'orientation de ladite au moins une source de lumière (7, 22) par rapport à l'endroit (FF, FN) prédéfinissable du local (2) est déterminée, et l'effet sur l'incidence de la lumière est calculé à partir de la position et/ou de l'orientation et/ou du comportement de rayonnement de ladite au moins une source de lumière (7, 22).

**15.** Procédé selon l'une des revendications 9 à 14,

**caractérisé en ce que**, lors de la création de la matrice de transfert, des données géographiques et/ou l'heure du jour et/ou la saison et/ou des conditions météorologiques sont prises en compte,
et/ou
**en ce que** les coefficients de la matrice de transfert sont des fonctions.

# Fig. 1

# Fig. 2

# Fig. 3

# Fig. 4

Start
Systeminbetriebnahme
(Vernetzung mit
Beleuchtungssystemen)

Ermittlung Struktur der Matrix A
aus n Lichtfeldsensoren und m
Beleuchtungssystemaktoren

Auslösungsevent
(Initialisierungstaste, -signal /
Lageänderungssignal)

Nein

Ja

Identifikation ohne gezielte
Anregung der Aktoren

Art der
Identifikation

Identifikation über
manuelle Zuordnung

Identifikation mit gezielter
Anregung der Aktoren

Ermittlung der Koeffizienten
(ggf. Wirkungsfunktionen)
der Matrix A aus realen,
manuellen Betrieb des
Raumes / der Anlage. Bestimmung der Koeffizienten
der die Wirkung verändernden
Aktoren auf die Sensoren bis
Konvergenzkriterien erfüllt.
Mittels üblicher
Parameterschätzverfahren

Seperate, sequentielle Aktivierung
der m Beleuchtungssystemaktoren

m

Manuelle Zuordnung
der Sensorposition
zum Raum und den
Beleuchtungssystemen,
z.B. durch grafische
Zuordnung auf dem
Display durch den
Nutzer / Installateur
Vorbelegung durch
Auswahl
vorberechneter
Matrizen A

Bestimmung der Wirkung der
einzelnen Beleuchtungssystemparameter (durch jeweilige
Aktoren) auf die n Sensoren:
Koeffizienten
(ggf. Wirkungsfunktionen)
der Matrix A in Spalte m.
Mittels üblicher
Parameterschätzverfahren

Ende
Nutzung der Übertragungsmatrix A zur Anpassung
der Lichtbedingungen am BAP als Funktion der
Sensorsignale durch Ansteuerung / Regelung der
Beleuchtungssystem-aktoren

# Fig. 5

Start
Feinabstimmung
der Matrix A

Informationen
über Tages-, Jahreszeit,
Sonnenschutz- / Blendschutzart und oder
elektrisches Beleuchtungssystem?

Nein

Ja

Anpassung der Koeffizienten /
Wirkungsfunktionen der Matrix A
auf Zeit und Datum, Sonnen- /
Blendschutz und oder elektrisches
Beleuchtungssystem

Ende
Nutzung der Übertragungsmatrix A zur Anpassung
der Lichtbedingungen am BAP als Funktion der
Sensorsignale durch Ansteuerung / Regelung der
Beleuchtungssystem-aktoren

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10037556 A1
- US 2011220299 A1
- WO 2015023843 A1